(19) Europäisches Patentamt
European Patent Office
Office européen des brevets

(11) EP 0 625 561 B1

(12) EUROPEAN PATENT SPECIFICATION

(45) Date of publication and mention of the grant of the patent:
**02.09.1998 Bulletin 1998/36**

(51) Int Cl.[6]: **C09K 21/10**, C09K 21/00

(21) Application number: **94107347.0**

(22) Date of filing: **11.05.1994**

# (54) Fire-retardant compositions and fire-proofing process

Feuerhemmende Zusammensetzungen und Verfahren zum Flammfestausrüsten

Compositions ignifugeantes et procédé pour retarder le feu

(84) Designated Contracting States:
**AT BE CH DE DK ES FR GB GR IE IT LI LU MC NL PT SE**
Designated Extension States:
**SI**

(30) Priority: **19.05.1993 IT TO930342**

(43) Date of publication of application:
**23.11.1994 Bulletin 1994/47**

(73) Proprietors:
- **SAINT PETER S.R.L.**
  **I-10121 Torino (IT)**
- **Silva S.r.l.**
  **12087 Pamparato (Cuneo) (IT)**

(72) Inventor: **Giovando, Gualtiero**
**I-12065 Monforte d'Alba (Cuneo) (IT)**

(74) Representative: **Rambelli, Paolo et al**
**c/o JACOBACCI & PERANI S.p.A.**
**Corso Regio Parco, 27**
**10152 Torino (IT)**

(56) References cited:
**EP-A- 0 157 143**
**EP-A- 0 375 618**
**US-A- 4 061 810**
**US-A- 4 585 703**

- **DATABASE WPI Week 7526, Derwent Publications Ltd., London, GB; AN 75-43325W & JP-A-49 106 534 (SANYO)**
- **DATABASE WPI Week 7505, Derwent Publications Ltd., London, GB; AN 75-08099W & JP-A-49 052 230 (SANYO)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 625 561 B1

Printed by Jouve, 75001 PARIS (FR)

## Description

The present invention relates to fire-retardant compositions and fireproofing processes which are able to retard the outbreak of fire and to inhibit flames in the following materials and manufactured articles derived therefrom: reconstituted wood products (that is to say: MDF, HDF, veneers, plywood, laminated woods, laminboard, microlaminates, chipboard) natural woods, worked or otherwise; paper; impregnated paper; plastics laminates; cardboard, corrugated board; amino-resin based adhesives; thermosetting polymeric materials and articles manufactured therefrom (of which the following may be given as examples: alkyd, unsaturated polyester, epoxy, acrylic, phenolic resins, aminoresins, silicone, styrene, polyamide, allyl, expanded resins), thermoplastics (of which the following thermoplastic polymers are examples: polyethylene, polypropylene, polyvinyl chloride, vinyl, vinylidene, acrylic, methacrylic, styrene, polyamide, saturated polyester, polymers derived from cellulose, polycarbonates, two-dimensional polyurethanes, expanded thermoplastics), elastomers (examples of which are: natural and synthetic rubbers, polyurethane rubbers, expanded elastomers); paints (solvent-based or water-based); cement and concrete, bricks and tiles.

US-A-4061810 describes compositions which impart improved flame retardancy to carpets, which comprise a physical mixture of oxides or hydroxides of tin, antimony, aluminium or zinc with a hydroxycarboxylic acid.

The fire-retardant compositions of the invention are defined by the appended claims.

In admixture with the fire-retardant agent defined in Claim 1, the composition of the invention may comprise as useful fire-retardants salts of the following acids: citric, tartaric, malic, fumaric, and although less effective, salts of other hydroxyacids such as : glycolic, glyoxylic, glyconic, glucaric, saccharic, mucic, lactic acids) or the salts of some simple mono- or di-carboxylic acids (examples are: formic, acetic, oxalic, malonic, succinic, fumaric, maleic acids).

The acids mentioned above are for the most part polycarboxylic acids whereby a great variety of acid, neutral or basic salts are possible; some of these salts are water soluble while others are completely insoluble in water, others are soluble in solvents, enabling them to be usable for a wide range of applications; one aspect of this invention is that all these salts are, although with variable success, fire retardants.

The neutralising of these acids has particular importantance in contributing to the final fire-retarding effect; for this purpose the neutralising agents which are useful to form the corresponding salts are: oxides, hydroxides and basic salts of the following cations, wherever they exist: lithium, sodium, potassium, magnesium, zinc; amonium hydroxide; amines (examples are melamine and benzoguanamine); aminoalcohols (particularly diethanolamine and triethanolamine); some amides (particulary urea and dicyandiamide). The preferred salts are neutral citrates of sodium and/or potassium and acid fumarates and tartrates of potassium, sodium and ammonium.

According to the invention it has been found that the fire-retardant effect of these salts reaches a maximum if coordination compounds are formed between the salts of the acids just described and certain compounds of aluminium (examples of aluminium compounds usable are: halides, sulphates, alums, formates, acetates, aluminates, nitrates).

It is known that aluminium can coordinate with organic compounds containing oxygen. The coordination compounds formed between the aluminium salts and the carboxylic acids have a structure of the type:

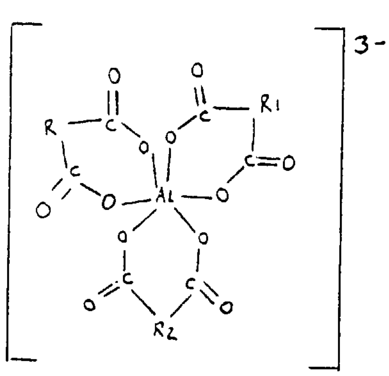

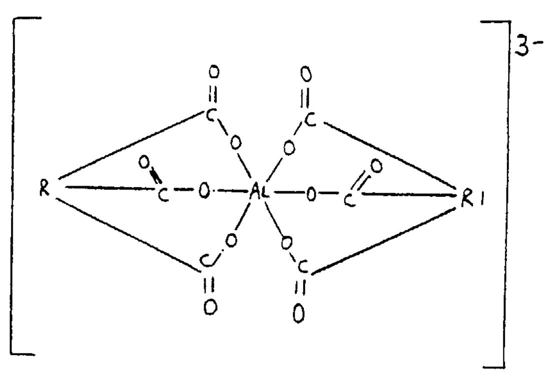

in which R, $R_1$ and $R_2$ are the chain or ring of the carboxylic acid.

These coordination compounds, are acidic, neutral or basic according to whether the reaction is carried out in an acidic, neutral or basic medium; one structural example of such a complex salt is given by the general formula below in which the cations are indicated M:

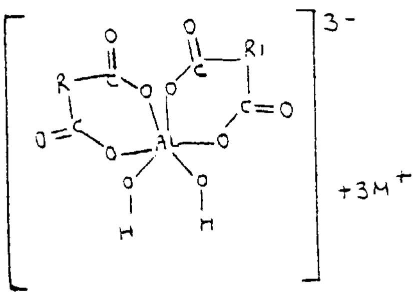
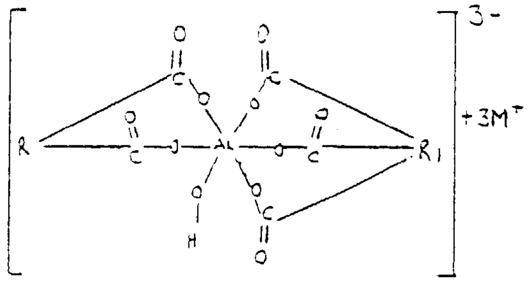

in which R, $R_1$ and $R_2$ are the chain or ring of the carboxylic acid.

According to the invention it has been found possible to form coordination compounds of this type, which exhibit a high fire-retardant capacity, in which the aluminium is simultaneously coordinated with the polyhydroxyl compound and also salified or coordinated with the inorganic acid (examples of which are: phosphorous, phosphinous, phosphonic, phosphoric, metaphosphoric, polyphosphoric, sulphurous, sulphuric, sulphonic, sulphamic, carbonic, carbamic, molybdic acids); the general formula of these coordinated salts may be represented as:

$$\frac{M_v\, H_x}{\text{cation}} \cdot \frac{[Al_y\, (A)_3 \,.\, (R\text{-}COO^-)_w \,.\, (OH)_z]}{\text{anion complex}}$$

| | |
|---|---|
| M = | metal, ammonium, amine or amide group |
| H = | hydrogen ion |
| A = | inorganic anion |
| R-COO = | carboxylic acid group |
| OH = | hydroxyl |
| V = | between 2 and 6 |
| X = | between 0 and 4 |
| Y = | between 1 and 6 |
| W = | between 1 and 6 |
| Z = | between 0 and 4 |

One of the various possible structural examples given by the above may be represented by the following formula:

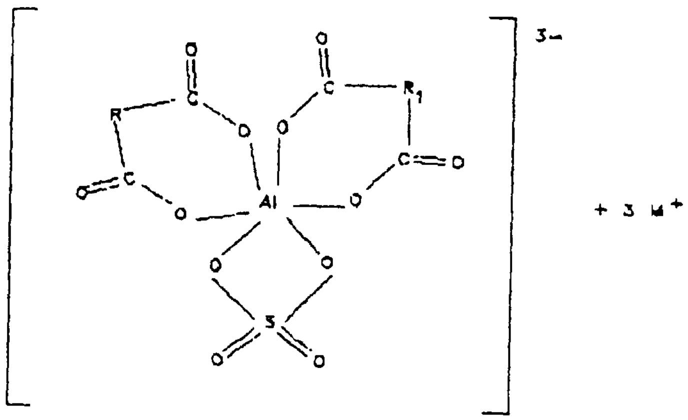

in which R and $R_1$ are the chain or ring of the carboxylic acid.

These coordination compounds are formed by combining the elementary constituents (carboxylic acids, neutralising bases, aluminium compounds, each in the exact desired molar quantity (otherwise the coordination compounds do not form) in water and heating to a temperature of between 70°C and 120°C for periods of between 5 minutes and 30 minutes; when it is intended to form a coordination compound between aluminium, the carboxylic acid and carbonic acid, a soluble carbonate will be used, this being added only after the coordination between the aluminium and the carboxylic acid has been achieved and after this compound has been salified.

The fire-retardant properties of the compounds described above are very much enhanced (or vice versa they much enhance) by enormous synergic effects:

1) by carbonates (acidic, neutral, basic) of the following cations: lithium, sodium, potassium, magnesium, zinc;
2) by triazines (as such, substituted, salified, esterified, coordinated, condensed) of which examples are: cyanuric acid, melamine, benzoguanamine, melam ($C_6H_9N_{11}$), melem ($C_6H_6N_{10}$), melon ($C_6H_3N_9$);
3) possibly by non-complexed carboxylic acid salts.

The coordinated triazines particularly preferred are coordination compounds obtained from aluminium salts (examples of which are: halides, sulphates, alums, formates, acetates, aluminates, nitrates) and melamine or more preferably melamine condensed with itself (melam ($C_6H_9N_{11}$), obtained at 360°C with loss of one molecule of ammonia per two molecules of melamine; melem ($C_6H_6N_{10}$), obtained at 400°C with loss of two molecules of ammonia for each two molecules of melamine; melon ($C_6H_3N_9$), obtained at 500°C with loss of three molecules of ammonia for each two molecules of melamine);

These coordination compounds of aluminium and melamine or condensed melamine which themselves have fire-retardant properties can be represented by the following general formula:

| $[(N)_l\,(Al)_m\,(OH)_n]\,.\,[(M)_o\,(H)_p]$. | | $[(A)_q]$ | |
|---|---|---|---|
| cationic part | | anionic part | |
| N = | melamine or condensed melamine | l = | from 1 to 9 |
| Al = | aluminium | m = | from 1 to 3 |
| OH = | hydroxyl | n = | from 0 to 4 |
| M = | metal, ammonium, amine | o = | from 0 to 6 |
| H = | hydrogen ion | p = | from 0 to 6 |
| A = | organic or inorganic anion | q = | from 0 to 6 |

The coordination compounds of aluminium described above are formed by combining the compounds (melam or melem or melon produced by condensation under vacuum at the temperatures indicated above), each in the desired molar quantity, in aqueous suspension and heating to a temperature of between 70°C and 100°C for periods of between 5 minutes and 60 minutes, preferably between 5 and 15 minutes; the reaction continues when the suspension is evaporated to dryness in an oven (temperatures particularly useful are between 70°C and 240°C preferably between 100°C and 160°C) and the compounds are obtained.

Main advantages of these fire retardants are:

1) these compounds are not noxious
2) when decomposed by heat these fire retardants do not release toxic fumes or vapours
3) simplicity of production
4) they are produced from raw materials which are readily available in any civilised country
5) they are of moderate cost
6) high fire-retardant efficiency
7) the possibility of having a range of fire-retardants: water soluble, soluble in solvents, insoluble.

The salts of the complexes described above which are soluble in water and partially soluble in organic phases may be used in fire proofing processes in the following, exemplary manner:

a) to fireproof: reconstituted wood products (that is to say: MDF, HDF, veneers, plywood, laminated woods, laminboard, microlaminates, chipboard); natural wood, worked or otherwise; these compounds just described are used, with or without the synergic effect of carbonates or triazine compounds in aqueous or aqueous- alcoholic solution at concentrations of between 25% and 70%, preferably between 35% and 60%, or evaporated to dryness and used in powder form, in quantities of between 1% and 30%, preferably between 2% and 15% (with reference to the weight of the manufactured article to which they are added);
b) to fireproof paper, these complexes are used in aqueous solution in concentrations of between 2% and 25%, preferably between 5% and 10%;
c) to fireproof cardboard and corrugated board, aqueous solutions are used with concentrations of between 2% and 40%, preferably between 5% and 25%;
d) to fireproof amino-resin based glues, aqueous or aqueous-alcoholic solutions are used with quantities of between 1% and 15%, preferably between 2% and 10%, this percentage being given as the quantity of dry fire-retardant to the quantity of glue.

Those salts of the complexes described above which are insoluble in water and in organic phases may be used in fireproofing processes as fillers in powdered form to be added preferably in the cross-linking stage (for thermosetting polymers and polyurethanes) or in the stage in which the mixture is formed (for natural elastomers) or in the stage in which the granules are melted or worked (for thermopolymers) or in suspension for fire-retardant paints (carried out in the paint factory or at the moment of use; these paints are of general use as fire retardants and in particular, appear to be very useful for reconstituted wood products) or during the production of fibre mixtures for the production of paper, cardboard and reconstituted wood products in the following, explanatory manner:

1) to fireproof: thermosetting polymeric materials, thermoplastics or elastomers, synergic mixtures are preferably used based on: coordination compounds of aluminium described above (in quantities which may vary between 20% and 70%, preferably between 30% and 50% of the total weight of the mixture); acid fumarates or tartrates (of potassium, sodium, lithium; in quantities variable between 20% and 70%, preferably between 40% and 60% of the total weight of the mixture); certain inorganic carbonates (especially magnesium and zinc in quantities which may vary between 10% and 40%, preferably between 20% and 30% of the total weight of the mixture) and possibly triazine compounds (especially salts of cyanuric acid or salified or complexed melamine in quantities which may vary between 10% and 60%, preferably between 20% and 40% of the total weight of the mixture); these fire retardants in synergic mixtures, are used as fillers in powdered form to be added in quantities of between 10% and 200%, preferably between 40% and 100% (with reference to the weight of the polymers to be fireproofed).

PREPARATIVE EXAMPLES:

Preparative Example No. 1

The following compounds were introduced into a suitable reactor: 2 moles of gluconic acid; 1 mole of sodium aluminate; 25 moles of water; these compounds were then heated to 70°C for 10 minutes after which 2 moles of sodium carbonate were added; the mixture was then heated to 90°C for further 10 minutes; once cooled, a transparent, straw-coloured, highly viscous, transparent liquid was obtained with a pH of 9.5.

Preparative Example No. 2

The following compounds were introduced into a suitable reactor: 4 moles of sodium hydroxide; 2 moles of malic acid; 1 mole of aluminium hydrochloride; 50 moles of water; these compounds were then heated to 95°C for 10 minutes; 2 moles of potassium carbonate were then added; heating was continued for further 15 minutes; once cooled, a colourless, highly viscous liquid was obtained with a pH of 10.

Preparative Example No. 3

The following compounds were introduced into a suitable reactor: 2 moles of potassium hydroxide, 2 moles of sodium hydroxide; 2 moles of tartaric acid; 1 mole of neutral aluminium acetate; 1 mole of phosphoric acid; 30 moles of water; these compounds were then heated to 80°C for 15 minutes; 2 moles of potassium carbonate were then added, heating was continued for further 10 minutes; once cooled, a colourless, highly viscous liquid was obtained with a pH of 9.5.

Preparative Example No. 4

The following compounds were introduced into a suitable reactor; 4 moles of potassium hydroxide, 4 moles of sodium hydroxide; 4 moles of tartaric acid; 1 mole of aluminium sulphate; 200 moles of water; the compounds were heated to 95°C for 15 minutes; 1 mole of dicyandiamide was then added and heating was continued for further 10 minutes; once cooled, a paste which melted at about 75°C was obtained; pH 7.

Preparative Example No. 5

The following compounds were introduced into a suitable reactor: 6 moles of sodium hydroxide; 6 moles of potassium hydroxide; 4 moles of citric acid; 1 mole of aluminium sulphate; 200 moles of water; these compounds were heated to 100°C for 10 minutes; 3 moles of potassium carbonate and 3 moles of sodium carbonate were then added at a temperature of 80°C and this temperature was maintained for further 15 minutes; once cooled a colourless, highly viscous liquid was obtained with a pH of 9.5.

Preparative Example No. 6

The following compounds were introduced into a suitable reactor: 1 mole of lithium hydroxide; 1 mole of sodium hydroxide; 1 mole of potassium hydroxide; 1 mole of citric acid; 20 moles of water; the mass was heated to 70°C for 10 minutes; 2 moles of sodium carbonate were then added and the mixture was heated to 90°C for 10 minutes; once cooled, a colourless highly viscous liquid was obtained with a pH of 10.

Preparative Example No. 7

The following compounds were introduced into a suitable reactor: 3 moles of zinc or magnesium oxide; 6 moles of potassium hydroxide; 2 moles of citric acid; 3 moles of tartaric acid; 1 mole of aluminium sulphate; 200 moles of water; these compounds were then heated to 100°C for 15 minutes; 3 moles of potassium carbonate and 3 moles of sodium carbonate were then added and the temperature was maintained at 80°C for a further 10 minutes; once cooled, a colourless, highly viscous liquid was obtained with a pH of 9.5.

Preparative Example No. 8

The following compounds were introduced into a suitable reactor: 6 moles of sodium hydroxide; 3 moles of fumaric acid; 1 mole of aluminium chloride; 100 moles of water; these compounds were then heated to 100°C for 10 minutes; 1 mole of sodium carbonate was added and the temperature was kept at 70°C for further 10 minutes; once cooled, a colourless, highly viscous liquid was obtained with a pH of 7.5.

Preparative Example No. 9

The following compounds were introduced into a suitable reactor: 12 moles of potassium hydroxide; 4 moles of citric acid; 1 mole of aluminium sulphate; 200 moles of water; these compounds were then heated to 100°C for ten minutes; 6 moles of potassium carbonate were then added and the temperature was kept at 80°C for further 10 minutes; once cooled, a highly viscous, colourless liquid was obtained with a pH of 9.5.

Preparative Example No. 10

The following compounds were introduced into a suitable reactor: 3 moles of potassium hydroxide, 3 moles of sodium hydroxide, 2 moles of citric acid; 1 mole of aluminium formate; 100 moles of water; these compounds were

heated to 70°C for 10 minutes; once cooled, a colourless, highly viscous liquid was obtained with a pH of 7.

Preparative Example No. 11

The following compounds were introduced into a suitable reactor: 10 moles of sodium hydroxide; 4 moles of citric acid; 2 moles of sodium aluminate; 200 moles of water; these compounds were then heated to 80°C for 15 minutes; once cooled, a highly viscous colourless liquid was obtained with a pH of 7.

Preparative Example No. 12

The following compounds were introduced into a suitable reactor: 3 moles of sodium hydroxide; 2 moles of potassium hydroxide; 2 moles of citric acid; 1 mole of aluminium formate; 50 moles of water; these compounds were then heated to 80°C for 10 minutes; ½ mole of dicyandiamide and ½ mole of urea were then added and the mixture was heated to 90°C for further 10 minutes; once cooled, a pasty mass was obtained which melted at 70°C; pH 7.5.

Preparative Example No. 13

The following compounds were introduced into a suitable reactor: 3 moles of potassium hydroxide; 3 moles of triethanolamine; 2 moles of citric acid; 1 mole of neutral aluminium acetate; 100 moles of water; these compounds were then heated to 70°C for 5 minutes; 2 moles of potassium carbonate were then added; the mass was heated to 90°C for 10 minutes; finally 10 moles of isopropanol and 10 moles of propylene glycol were added at a temperature of 80°C; once cooled, a colourless highly viscous liquid was obtained with a pH of 10.

Preparative Example No. 14

The following compounds were introduced into a suitable reactor: 2 moles of potassium hydroxide; 2 moles of sodium hydroxide; 2 moles of malic acid; 1 mole of substituted phosphonic acid; 1 mole of aluminium sulphate; 200 moles of water; the compounds were then heated to 80°C for 10 minutes; 2 moles of potassium carbonate and 2 moles of diethylene glycol were then added at a temperature of 90°C for 10 minutes; once cooled, a colourless, highly viscous liquid was obtained with a pH of 9.5.

Preparative Example No. 15

A mixture was formed which was constituted by:

1) 50% of the following product: the following compounds were introduced into a suitable reactor: 2 moles of sodium hydroxide; 1 mole of potassium hydroxide; 1 mole of citric acid; 1 mole of aluminium sulphate was added; 200 moles of water; these compounds were then heated to 95°C for 15 minutes; 1 mole of sodium carbonate was then added and heating was continued for further 10 minutes; once cooled, a colourless, opalescent, highly viscous liquid was obtained with a pH of 7;
2) 20% of acid potassium tartrate
3) 20% by weight of a triazine coordination compound obtained in aqueous suspension from 4 moles of melamine and 1 mole of aluminium sulphate; these compounds were heated to 80°C for 15 minutes; they were then cooled and the suspension was filtered; it was then dried (in an oven at 150°C) and the complex obtained was ground and sieved;
4) 10% of basic magnesium carbonate.

A cream was obtained which could be spread by machine or with a spatula by hand.

Preparative Example No. 16

A mixture was formed which was constituted by:

1) 20% of the following product:
the following compounds were introduced into a following reactor: 1 mole of potassium hydroxide; 1 mole of tartaric acid; 1 mole of aluminium sulphate was added; 200 moles of water; these compounds were then heated to 95° for 15 minutes; once cooled, a colourless, highly viscous liquid was obtained with a pH of 4.5; this liquid was evaporated to dryness;

2) 20% of acid potassium tartrate
3) 40% by weight of a triazine coordination compound obtained in aqueous suspension from 4 moles of melamine and 1 mole of aluminium sulphate; these compounds were heated to 80°C for 15 minutes; they were then cooled and the suspension filtered; the complex obtained was then dried (in an oven at 150°C) ground and sieved;
4) 20% of basic magnesium carbonate.

A very white, covering white powder was obtained.

EXAMPLES OF USE:

Example of Use No. 1

Wallpaper was spread with an aqueous 10% solution of the fire-retardant of Example No. 1 with a distribution of 15g dry weight of fire-retardant per square metre of paper; the treated paper was dried; the flame retardant action was shown to be excellent.

Example of Use No. 2

Wrapping paper was sprayed with a 10% aqueous solution of the fireretardant of Preparative Example No. 2, with a distribution of 13g dry weight of fire retardant per square metre of paper; the treated paper was dried; the flame retardant action was very good.

Example of Use No. 3

Corrugated cardboard having two 5mm-thick corrugated layers was treated on its two outer faces with a 25% aqueous solution of the fire-retardant of Preparative Example No. 3; 26g dry weight of the fire retardant per square metre of the corrugated cardboard were applied; the treated corrugated cardboard was dried; the flame-retardant effect was excellent.

Example of Use No. 4

A fire retardant of Preparative Example No. 15 was sprayed mechanically onto a 15mm-thick reinforced cement sheet and then smoothed with a plastering trowel; this was then dried at ambient temperature for 12 hours; the fire-retardant properties of the sheet obtained fell within Italian certification standards.

Example of Use No. 5

Wood fibres for the production of a 7mm-thick MDF panel were sprayed with the fire retardant of Preparative Example No. 4; they were then dried in an oven at 120°C; 15% of ureic resin and its hardener were then added and mixed with the wood fibres treated with the fire retardant; they were then pressed at 25kg/cm$^2$ and 120°C for 8 minutes; the fire-retardant properties of the panel obtained fell within the certification standards of Italian Class 1 and French Class M1.

Example of Use No. 6

The ureic resin used for binding wood fibres used for forming an MDF panel was treated with 50% by weight (with respect of the weight of the resin) of the fire-retardant of Preparative Example No. 16; the hardeners for the resin were then added and the fibres were then mixed in; a 4mm-thick panel was formed in a press at a pressure of 20kg/cm$^2$ and at 120°C for 8 minutes; the fire-retardant properties of the panel obtained fell within the certification standards of Italian Class 1.

Example of use No. 7

A 3mm-thick HDF panel was treated by surface deposition (on the felted fibres before pressing) with the powdered fire retardant of Preparative Example No. 16; these were then pressed at 40kg/cm$^2$ and 190°C for 6 minutes; the fire-retardant properties of the panel obtained fell within the certification standards of Italian Class 1 and French Class M1.

Example of Use No. 8

A 3mm-thick HDF panel was treated by spraying with a water-based ureic paint containing: 30% of the fire retardant of Preparative Example No. 8 and the hardener; the paint was hardened and dried at 120°C in an oven; the physical and mechanical characteristics of the panel obtained fell within ISO standards and its fire-retardant properties fell within the certification standards of Italian Class 1.

Example of Use No. 9

A 4mm-thick HDF panel was spread with the fire-retardant of Preparative Example No. 15; the panel was dried at 120°C in an oven; the fire-retardant properties of the panel obtained fell within the certification standards of Italian Class 1 and French Class M1.

Example of Use No. 10

Several poplar wood veneers were spread with the fire-retardant of Preparative Example No. 10; a further 20 sheets were glued with a ureic-resin based adhesive to which the appropriate hardener had been added; these were then pressed and the resin polymerised at 25kg/cm$^2$ and 120°C for 10 minutes; the physical and mechanical characteristics of the multi-laminar panel obtained fell within ISO standards while the fire-retardant properties fell within the certification standards of Italian Class 1.

Example of Use No. 11

Several beach veneers were spread with the fire retardant of Preparative Example No. 10 so as to give 200g of fire retardant/m$^2$ of veneer; 6 veneers were glued together with ureic resin to which the appropriate hardener and 50% by weight of the fire-retardant of Preparative Example No. 16 had been added so as to form a plywood panel; this was pressed and the resin was polymerised at 25kg/cm$^2$ and 120°C for 10 minutes; the physical and mechanical characteristics of the plywood panel obtained fell within the ISO standards while the fire-retardant properties fell within the certification standards of Italian Class 1 and French Class M1.

Example of Use No. 12

A 7mm-thick chipboard panel was treated by injection (by means of a pump) and subsequent mixing with the fire retardant of Preparative Example No. 12 and the hardener; the paint was then hardened and dried at 120°C in an oven; the fire-retardant properties of the panel obtained fell within the certification standards of Italian Class 1.

Example of Use No. 13

Poplar wood chips for forming a chipboard panel were treated with the fire retardant of Preparative Example No. 12; the resin and its hardener were added and then mixed with the chips; an 18mm-thick board was formed in a press operated at 25kg/cm$^2$ and 120°C for 8 minutes; the fire-retardant properties of the board obtained fell within the certification standards of Italian Class 1.

Example of Use No. 14

Deal laths were immersed in a 20% solution of the fire retardant of Preparative Example No. 14 to which 0.5% of an absorbing agent (texal K8) had been added, the treatment being carried out at 60°C for 30 minutes, and then the laths were dried in a drier at 80°C for 1 hour; they were then sprayed with an aqueous solution containing 45% dry weight of the fire-retardant of Preparative Example No. 13; they were then dried at 120°C in an oven; the laths could be used as such or for forming laminated structures and their fire-retardant properties fell within the certification standards of Italian Class 1.

Example of Use No. 15

Kraft paper was treated with 31% of phenolic resin to which 10% of an aqueous-alcoholic solution of the fire retardant of Preparative Example No.13 had been added; it was then dried at 120°C and 6 sheets of the treated paper plus 1 melamine resin impregnated decorative sheet, were superimposed, and then laminated at 95kg/cm$^2$ and 155°C for 7 minutes; the physical and mechanical characteristics of the laminate obtained fell within ISO standards while its

fire-retardant properties fell within the certification standards of Italian Class 1 and French Class M1.

Example of Use No. 16

Kraft paper was treated with 32% of phenolic resin to which 10% of an aqueous-alcoholic solution of the fire retardant of Preparative Example No. 14 had been added; it was dried at 120°C and then 6 sheets of treated paper and 1 melamine resin impregnated decorative sheet, were superimposed, and then laminated at 100kg/cm$^2$ and 150°C for 8 minutes; the physical and mechanical characteristics of the laminate obtained fell within ISO standards while its fire-retardant properties fell within the certification standards of Italian Class 1.

Example of Use No. 17

An unsaturated polyester resin of the isophthalic-type was treated with the fire-retardant of Preparative Example No. 16 in a quantity of 50% with respect to 100% of the resin used for forming a 3mm-thick sheet; cross-linking was effected with methyl ethyl ketone peroxide added in a ratio of 2% to the weight of the resin, accelerated with 6% cobalt 2-ethylhexanoate used in a ratio of 0.2% to the weight of the resin (this was carried out at ambient temperature). The manufactured article obtained had very good mechanical characteristics and its fire-retardant properties fell within the certification standards of Italian Class 1 and French Class M1.

Example of Use No. 18

A paint was treated with the fire-retardant of Preparative Example No. 15; the surfaces of a sheet of plywood formed from 9 layers and having a thickness of 11mm (which had already been treated by the spreading of the fire-retardant product of Preparative Example No. 10 between the sheets) was then treated with this paint added in a ratio of 5% to the weight of the wood. The fire-retardant properties of the finished manufactured product fell within the certification standards of Italian Class 1 and French Class M1.

Example of Use No. 19

A mixture of SBR rubber was treated with the fire retardant of Preparative Example No. 16 added in a ratio of 80% to the weight of the rubber. The fire-retardant properties of the manufactured product (3mm-thick sheet) fell within the certification standards of Italian Class 1.

Example of Use No. 20

Polyethelene was treated by the incorporation of the fire-retardant of Preparative No. 16 within the molten mass, the fire-retardant being added in a ratio of 70% to the weight of the polymer and a sheet having a thickness of 2mm was then cast. The fire-retardant properties of the manufactured product fell within the certification standards of Italian class 1.

Example of Use No. 21

A cellulose paste and a wood paste for forming cardboard were treated with the fire-retardant of Preparative Example No. 16 added in a ratio of 10% to the weight of the finished product. The fire-retardant properties of the cardboard obtained showed that it was very resistant to fire.

**Claims**

**1.** A fire-retardant composition comprising salts of acidic aluminium coordination compounds, wherein aluminium is coordinated with the oxygen atom of at least a carboxylic acid and optionally with the oxygen atom of an inorganic acid, said compound being obtainable by:

a) combining in water an aluminium compound selected from the group consisting of halides, sulphates, alums, nitrates, aluminates, formates and acetates with a carboxylic acid selected from the group consisting of formic, acetic, oxalic, malonic, succinic, fumaric, maleic, lactic, citric, tartaric, malic, glycolic, glyoxylic, gluconic, glucaric, saccharic, mucic and mixtures thereof or with a salt thereof, and
b) optionally further combining the product of reaction a) in water with an acid selected from the group consisting

of sulphurous, sulphuric, sulphamic, sulphonic, phosphorous, phosphonic, orthophosphoric, pyrophosphoric, metaphosphoric, polyphosphoric, carbonic, carbamic, molybdic acid and mixtures thereof.

2. A fire-retardant composition according to claim 1, further comprising in admixture with said aluminium coordination compound a neutral, acidic or basic carbonate of a metal selected from the group consisting of lithium, sodium, potassium, magnesium and zinc.

3. A fire-retardant composition according to claims 1 or 2, further comprising in admixture a triazine compound selected from the group consisting of benzoguanamine, melamine, melamine condensates, substituted melamines, salified melamines, melamines coordinated with aluminium, cyanuric acid and its salts or esters.

4. A fire-retardant composition according to claim 3, wherein said melamine condensate is selected from melam ($C_6H_9N_{11}$), melem ($C_6H_6N_{10}$) and melon ($C_6H_3N_9$).

5. A fire-retardant composition according to claim 3, wherein said coordination compound of melamine with aluminium is the product of coordination of an aluminium salt selected from the group consisting of halides, sulphates, alums, formates, acetates, aluminates and nitrates with melamine or melamine condensed with itself.

6. A fire-retardant composition according to any of claims 1 to 5, wherein said salt of the aluminium coordination compound is a salt of a cation selected from the group consisting of ammonium, lithium, sodium, potassium, magnesium, zinc and aluminium.

7. A fire-retardant composition according to any of claims 1 to 6, further comprising in admixture, a non-complexed carboxylic acid salt.

8. A fire-retardant composition according to claim 1, wherein said salt of acid aluminium coordination compound is present in the amount up to 80%, the composition further comprising up to 80% of a salt of a carboxylic acid, up to 50% of a carbonate and up to 80% of a triazine compound.

9. A fire-retardant composition according to claim 8, comprising between 20 and 50% of said aluminium coordination compound, from 20 to 50% of a carboxylic acid salt, from 10 to 40% of a carbonate or basic carbonate and from 20 to 50% of a triazine compound.

10. A method for fire-proofing a material selected from the group consisting of reconstituted wood products, natural wood, amino-resin based adhesives, polymeric materials, paints, paper, cardboard, corrugated cardboard, plastics laminates, articles manufactured from brick-like materials or cement including the addition to said material of a fire-retardant composition according to any of claims 1 to 9.

11. A method of fire-proofing according to claim 10, wherein the fire-retardant composition is dissolved in a medium selected from the group consisting of water, mixtures of water and alcohols, mixtures of water and glycols or glycol ethers or esterified glycols and mixtures of alcohol and glycols.

12. A fire-proofing method according to claim 10, wherein the fire-retardant composition is dissolved in said medium in a concentration of between 5 and 85% by weight, preferably between 10% and 50% by weight.

13. A fire-proofing method according to claim 10, wherein the fire-retardant composition is evaporated to dryness and used in powder form or in a paste.

14. A fire-proofing method according to any claims 10 to 13, wherein the fire-retardant composition is added to the material to be fire-proofed in the amount of between 1 and 60% expressed as the dried weight of the fire-retardant composition with respect to the weight of the manufactured article from said material, preferably between 5 and 40% by weight.

## Patentansprüche

1. Feuerhemmende Zusammensetzung umfassend Salze von sauren Aluminium-Komplexverbindungen, worin Aluminium mit dem Sauerstoffatom von mindestens einer Carboxylsäure und, wenn erwünscht, mit dem Sauerstoffatom einer anorganischen Säure koordiniert ist, wobei die genannte Verbindung herstellbar ist durch:

a) Kombinieren in Wasser von einer Aluminiumverbindung ausgewählt aus der Gruppe umfassend Halide, Sulfate, Alaune, Nitrate, Aluminate, Formate und Acetate mit einer Carboxylsäure ausgewählt aus der Gruppe umfassend Ameisensäure, Essigsäure, Oxalsäure, Malonsäure, Bernsteinsäure, Fumarsäure, Maleinsäure, Milchsäure, Zitronensäure, Weinsäure, Äpfelsäure, Glykolsäure, Glyoxylsäure, Gluconsäure, Glucarsäure, Zucker, Schleimsäure und Mischungen derselben oder mit einem Salz derselben, und
b) wenn erwünscht, Kombinieren des Produktes der Reaktion a) in Wasser mit einer Säure ausgewählt aus der Gruppe umfassend schwefelige Säure, Schwefelsäure, Sulfaminsäure, Sulfonsäure, phosphorige Säure, Phosphonsäure, Orthophosphorsäure, Pyrophosphorsäure, Metaphosphorsäure, Polyphosphorsäure, Kohlensäure, Carbaminsäure, Molybdänsäure und Mischungen derselben.

**2.** Feuerhemmende Zusammensetzung nach Anspruch 1, weiter umfassend in Mischung mit der genannten Aluminium-Komplexverbindung ein neutrales, saures oder basisches Carbonat eines Metalls ausgewählt aus der Gruppe umfassend Lithium, Natrium, Kalium, Magnesium und Zink.

**3.** Feuerhemmende Zusammensetzung nach Anspruch 1 oder 2, weiters umfassend in Mischung eine Triazinverbindung ausgewählt aus der Gruppe umfassend Benzoguanamin, Melamin, Melaminkondensate, substituierte Melamine, salzbildende Melamine, Melamine koordiniert mit Aluminium, Cyanursäure und ihre Salze oder Ester.

**4.** Feuerhemmende Zusammensetzung nach Anspruch 3, dadurch gekennzeichnet, daß das genannte Melaminkondensat ausgewählt ist zwischen Melam ($C_6H_9N_{11}$), Melem ($C_6H_6N_{10}$) und Melon ($C_6H_3N_9$).

**5.** Feuerhemmende Zusammensetzung nach Anspruch 3, dadurch gekennzeichnet, daß die genannte Komplexverbindung von Melamin mit Aluminium das Koordinationsprodukt eines Aluminiumsalzes ausgewählt aus der Gruppe umfassend Halide, Sulfate, Alaune, Formate, Acetate, Aluminate und Nitrate mit Melamin oder in sich selbst kondensiertem Melamin ist.

**6.** Feuerhemmende Zusammensetzung nach einem der Ansprüche 1 bis 5, dadurch gekennzeichnet, daß das genannte Salz der Aluminium-Komplexverbindung ein Salz eines Kations ausgewählt aus der Gruppe umfassend Ammonium, Lithium, Natrium, Kalium, Magnesium, Zink und Aluminium ist.

**7.** Feuerhemmende Zusammensetzung nach einem der Ansprüche 1 bis 6, weiters umfassend in Mischung eine nicht als Komplex vorliegendes Carbonsäuresalz.

**8.** Feuerhemmende Zusammensetzung nach Anspruch 1, dadurch gekennzeichnet, daß das genannte Salz der sauren Aluminium-Komplexverbindung vorhanden ist in einer Menge bis zu 80%, wobei die Zusammensetzung weiters bis zu 80% eines Salzes von Carbonsäure, bis zu 50% eines Carbonats und bis zu 80% einer Triazinverbindung umfaßt.

**9.** Feuerhemmende Zusammensetzung nach Anspruch 8, umfassend zwischen 20 und 50% der genannten Aluminium-Komplexverbindung, zwischen 20 und 50% eines Carbonsäuresalzes, zwischen 10 und 40% eines Carbonats oder basischen Carbonats und zwischen 20 und 50% einer Triazinverbindung.

**10.** Verfahren zum Flammfestmachen eines Materials ausgewählt aus der Gruppe umfassend rekonstituierte Holzprodukte, natürliches Holz, Klebstoffe auf Aminoharzbasis, polymere Materialien, Anstrichstoffe, Papier, Pappe, Wellpappe, Kunststofflaminate, Artikel hergestellt aus ziegelähnlichen Materialien oder Zement einschließlich der Zugabe einer feuerhemmenden Zusammensetzung nach einem der Ansprüche 1 bis 9 zu dem genannten Material.

**11.** Verfahren zum Flammfestmachen nach Anspruch 10, dadurch gekennzeichnet, daß die feuerhemmende Zusammensetzung in einem Medium ausgewählt aus der Gruppe umfassend Wasser, Mischungen von Wasser und Alkoholen, Mischungen von Wasser und Glykolen oder Glokolether oder veresterten Glykolen und Mischungen von Alkohol und Glykolen gelöst wird.

**12.** Verfahren zum Flammfestmachen nach Anspruch 10, dadurch gekennzeichnet, daß die feuerhemmende Zusammensetzung in dem genannten Medium in einer Konzentration zwischen 5 und 85 Gew.%, vorzugsweise zwischen 10 und 50 Gew.%, gelöst wird.

13. Verfahren zum Flammfestmachen nach Anspruch 10, dadurch gekennzeichnet, daß die feuerhemmende Zusammensetzung bis zur Trockne eingedampft und in Pulverform oder als Paste verwendet wird.

14. Verfahren zum Flammfestmachen nach einem der Ansprüche 10 bis 13, dadurch gekennzeichnet, daß die feuerhemmende Zusammensetzung dem flammfestzumachenden Material in einer Menge zwischen 1 und 60% beigemischt wird, ausgedrückt als das Trockengewicht der feuerhemmenden Zusammensetzung in bezug auf das Gewicht des aus dem genannten Material hergestellten Artikels, vorzugsweise zwischen 5 und 40 Gew.%.

**Revendications**

1. Composition ignifugeante comprenant des sels de composés de coordination acides de l'aluminium, dans lesquels l'aluminium est coordonné avec l'atome d'oxygène d'au moins un acide carboxylique et éventuellement avec l'atome d'oxygène d'un acide inorganique, ledit composé pouvant être obtenu en :

   a) combinant dans l'eau, un composé d'aluminium choisi parmi le groupe constitué des halogénures, des sulfates, des aluns, des nitrates, des aluminates, des formiates et des acétates avec un acide carboxylique choisi parmi le groupe constitué des acides formique, acétique, oxalique, malonique, succinique, fumarique, maléique, lactique, citrique, tartrique, malique, glycolique, glyoxylique, gluconique, saccharinique, (glucaric), saccharique, mucique et des mélanges de ceux-ci ou avec un sel de ceux-ci, et
   b) éventuellement en combinant en outre le produit de la réaction a) dans l'eau, avec un acide choisi parmi le groupe constitué des acides sulfureux, sulfurique, sulfamique, sulfonique, phosphoreux, phosphonique, orthophosphorique, pyrophosphorique, métaphosphorique, polyphosphorique, carbonique, carbamique, molybdique et des mélanges de ceux-ci.

2. Composition ignifugeante selon la revendication 1, comprenant en outre, en supplément audit composé de coordination de l'aluminium, un carbonate neutre, acide ou basique d'un métal choisi parmi le groupe constitué du lithium, du sodium, du potassium, du magnésium et du zinc.

3. Composition ignifugeante selon la revendication 1 ou 2, comprenant en outre en supplément, un composé de triazine choisi parmi le groupe constitué de la benzoguanamine, de la mélamine, des condensats de mélamine, des mélamines substituées, des mélamines salifiées, des mélamines coordonnées avec de l'aluminium, de l'acide cyanurique et de ses sels ou esters.

4. Composition ignifugeante selon la revendication 3, dans laquelle ledit condensat de mélamine est choisi parmi le melam ($C_6H_9N_{11}$), le melem ($C_6H_6N_{10}$), et le melon ($C_6H_3N_9$).

5. Composition ignifugeante selon la revendication 3, dans laquelle ledit composé de coordination de la mélamine de l'aluminium est le produit de coordination d'un sel d'aluminium choisi parmi le groupe constitué des halogénures, des sulfates, des aluns, des formiates, des acétates, des aluminates et des nitrates avec la mélamine ou de la mélamine condensée avec elle-même.

6. Composition ignifugeante selon l'une quelconque des revendications 1 à 5, dans laquelle ledit sel du composé de coordination de l'aluminium est un sel d'un cation choisi parmi le groupe constitué de l'ammonium, du lithium, du sodium, du potassium, du magnésium, du zinc et de l'aluminium.

7. Composition ignifugeante selon l'une quelconque des revendications 1 à 6, comprenant en outre en supplément, un sel d'acide carboxylique non complexé.

8. Composition ignifugeante selon la revendication 1, dans laquelle ledit sel du composé de coordination acide de l'aluminium est présent en une quantité allant jusqu'à 80%, la composition comprenant en outre jusqu'à 80% d'un sel d'un acide carboxylique, jusqu'à 50% d'un carbonate et jusqu'à 80% d'un composé de triazine.

9. Composition ignifugeante selon la revendication 8, comprenant entre 20 et 50% dudit composé de coordination de l'aluminium, de 20 à 50% d'un sel d'acide carboxylique, de 10 à 40% d'un carbonate ou d'un carbonate basique et de 20 à 50% d'un composé de triazine.

10. Procédé d'ignifugation d'un matériau choisi parmi le groupe constitué de produits en bois reconstitué, du bois

naturel, d'adhésifs à base de résine aminée, de matériaux polymères, de peintures, de papier, de carton, de carton ondulé, de laminés plastiques, d'articles fabriqués à partir de matériaux semblables à des briques ou à partir de ciment, incluant l'addition audit matériau, d'une composition ignifugeante selon l'une quelconque des revendications 1 à 9.

**11.** Procédé d'ignifugation selon la revendication 10, dans lequel la composition ignifugeante est dissoute dans un milieu choisi parmi le groupe constitué de l'eau, de mélanges d'eau et d'alcools, de mélanges d'eau et de glycols ou d'éthers glycoliques ou de glycols estérifiés et de mélanges d'alcool et de glycols.

**12.** Procédé d'ignifugation selon la revendication 10, dans lequel la composition ignifugeante est dissoute dans ledit milieu, à une concentration d'entre 5 et 85% en poids, de préférence entre 10% et 50% en poids.

**13.** Procédé d'ignifugation selon la revendication 10, dans lequel la composition ignifugeante est évaporée jusqu'à siccité et utilisée sous forme de poudre ou dans une pâte.

**14.** Procédé d'ignifugation selon l'une quelconque des revendications 10 à 13, dans lequel la composition ignifugeante est ajoutée au matériau à ignifuger, selon la quantité comprise entre 1 et 60% exprimé en poids sec de la composition ignifugeante par rapport au poids de l'article fabriqué à partir dudit matériau, de préférence entre 5 et 40% en poids.